# EUROPEAN PATENT SPECIFICATION

(11) **EP 3 221 058 B1**
(45) Date of publication and mention of the grant of the patent: **06.02.2019**
(21) Application number: 15804976.7
(22) Date of filing: 10.11.2015
(51) Int. Cl.: B03B 9/06, B03B 11/00, B65G 33/10

(54) **A FEEDING DEVICE AND A PLANT FOR RECLAIMING CONCRETE RESIDUES**
ZUFÜHRUNGSVORRICHTUNG UND ANLAGE ZUR RÜCKGEWINNUNG VON RESTBETON
DISPOSITIF D'ALIMENTATION ET INSTALLATION DE RÉCUPÉRATION DE RÉSIDUS DE BÉTON

(30) Priority: 21.11.2014 IT MO20140339
(43) Date of publication of application: 27.09.2017
(73) Proprietor: Wamgroup S.p.A., Modena 41124 (IT)
(72) Inventor: MARCHESINI, Vainer, I-41030 San Prospero Modena (IT); DALLA NORA, Marco, I-47122 Forli' (IT)
(74) Representative: Colò, Chiara
(86) International application number: PCT/IB2015/058665
(87) International publication number: WO 2016/079635

(56) References cited:
- EP-A1- 0 167 646
- WO-A1-81/00394
- US-A- 6 000 645

## Description

The invention relates to a feeding device suitable for receiving concrete residues which were discharged, for example, by a concrete mixer, and for conveying such residues towards a concrete separator. The invention further relates to a plant for reclaiming aggregates from concrete residues. Separation apparatuses are known, also referred to as concrete separators, which enable aggregates to be reclaimed from concrete excess quantities remaining unused on concrete mixers, or from washing fluids used to wash concrete mixers or any other equipment handling concrete.

WO8100394 discloses an example of an apparatus for processing of remainder concrete comprising a feeding device and a separation device.

The concrete separators of the known type may comprise a hopper, in which the concrete residues are discharged by the concrete mixer, and an inclined screw conveyor, which collects from the hopper a liquid containing the aggregates to be reclaimed. A spiral blade of the screw conveyor conveys the aggregates upwards, causing them to exit from a discharge mouth. The liquid, which partially fills the screw conveyor so that the aggregates can be washed during conveyance thereof, overflows from the separator and is sent to a storage tank for subsequent processing.

The concrete separators of the known type have a limited capacity to process the liquid containing the aggregates to be reclaimed, which creates a limit to the speed at which the concrete residues can be discharged into the hopper of the separator by the drivers of the concrete mixers. In particular, in order that the concrete separator may operate properly, the flow rate of the screw conveyor shall be maintained below a pre-determined limit value. The speed at which the concrete residues are discharged into the separator hopper must not exceed the flow rate of the screw conveyor.

Consequently, it sometimes takes quite a long time to discharge the concrete residues into the separator hopper.

An object of the invention is to improve the methods currently used for feeding the known apparatuses with concrete residues containing aggregates to be reclaimed.

A further object is to speed up the discharge operations for discharging concrete residues from concrete mixers, the concrete residues containing aggregates to be reclaimed.

Another object is to increase efficiency and effectiveness of the separation apparatuses for separating aggregates from concrete residues.

In a first aspect of the invention, there is provided a feeding device for feeding a separation apparatus, the separation apparatus being suitable for separating aggregates from concrete residues in order to reclaim said aggregates, the feeding device comprising:
- a tank for containing a fluid, the fluid comprising a liquid in which the aggregates to be reclaimed are dispersed;
- a main screw conveyor for collecting said fluid from a collecting zone of the tank and conveying the liquid and the aggregates contained in said fluid towards the separation apparatus;
- at least one auxiliary screw conveyor positioned along a bottom surface of the tank for conveying the fluid towards said collecting zone.

The feeding device according to the first aspect of the invention defines a sort of storage area, which is positioned upstream of the separation apparatus and into which a fluid can be discharged at a speed that is independent of the flow rate that the separation apparatus is able to process. Said fluid contains concrete residues and a liquid part.

In fact, the tank sizes can be arbitrarily large, so that the tank can receive significant quantities of concrete residues from the concrete mixers. Therefore, the driver of a concrete mixer may discharge the whole quantity of residual concrete present on the concrete mixer at a high discharge speed, which also corresponds to the maximum discharge speed of the vehicle. Subsequently, the driver can move away and perform other tasks. The main screw conveyor acts as a metering unit which allows to control the amount of fluid which is brought out of the tank, by feeding the separation apparatus with a flow rate equal to the flow rate that the separation apparatus is able to process.

It is thus possible to connect an apparatus which operates continuously, i.e. the separation apparatus, with a discharge system working in a discontinuous manner, i.e. the concrete mixers.

The auxiliary screw conveyor allows the fluid contained in the tank to be continuously stirred, thereby preventing the solid components from separating from the liquid part of the fluid, or from aggregating, in which case they would solidify and drop on the bottom surface. Furthermore, the auxiliary screw conveyor allows the height of the tank to be kept limited. Should the auxiliary screw conveyor be lacking and the fluid descend towards the collecting zone exclusively owing to the force of gravity, the bottom surface of the tank would have to be very inclined. This would imply a considerable increase in the height of the tank and in the amount of water needed to fluidize the concrete residues inside the tank.

The feeding device according to the first aspect of the invention further allows to increase efficiency and effectiveness of the separation apparatus, which is thus fed in an optima! manner, i.e. with a homogeneous fluid that is sent to the separation apparatus in a continuous manner.

In an embodiment, the feeding device comprises a further auxiliary screw conveyor which co-operates with said at least one auxiliary screw conveyor for conveying the fluid towards the collecting zone.

This allows to obtain a balanced conveying system for conveying the fluid towards the collecting zone, besides improving the discharging logistics of concrete mixers.

The auxiliary screw conveyor and the further auxiliary screw conveyor may have respective axes arranged on a common plane.

The main screw conveyor can have an axis arranged transversely with respect to the common plane mentioned above.

In an embodiment, the main screw conveyor, the auxiliary screw conveyor and the further auxiliary screw conveyor may be arranged, in plan view, according to a "T"-shaped arrangement.

Owing to this type of arrangement, the concrete residues can be simultaneously discharged by two concrete mixers. In particular, each concrete mixer may be positioned near a branch of the "T" which corresponds to the auxiliary screw conveyor or the further auxiliary screw conveyor.

In an embodiment, the feeding device comprises a support frame which is suitable for resting on the ground so as to support the tank.

The feeding device according to this embodiment is not buried, but remains entirely out of the ground, thus requiring limited works for its installation and being easy to disassemble and transport, in order to be mounted again at a different location.

In an embodiment, the tank may have a height corresponding to the usual discharge height of the concrete mixer.

In this manner, it is not necessary to provide access ramps allowing the concrete mixers to discharge the concrete residues into the tank, which makes installation of the feeding device easier.

In a second aspect of the invention, there is provided a plant for reclaiming aggregates from concrete residues, according to claims 10-12.

The feeding device of the plant according to the second aspect of the invention acts as a storage area, which makes the speed at which the tank is filled independent of the speed at which the fluid is sent to the separation apparatus.

The invention will be better understood and carried out with reference to the attached drawings, which show an exemplificative and non-limiting embodiment thereof, wherein:
Figure 1 is a perspective view showing a plant for reclaiming aggregates from concrete residues;
Figure 2 is a top view showing a feeding device of the plant of Figure 1;
Figure 3 is a section taken along the plane III-III of Figure 2;
Figure 4 is a section taken along the plane IV-IV of Figure 2.

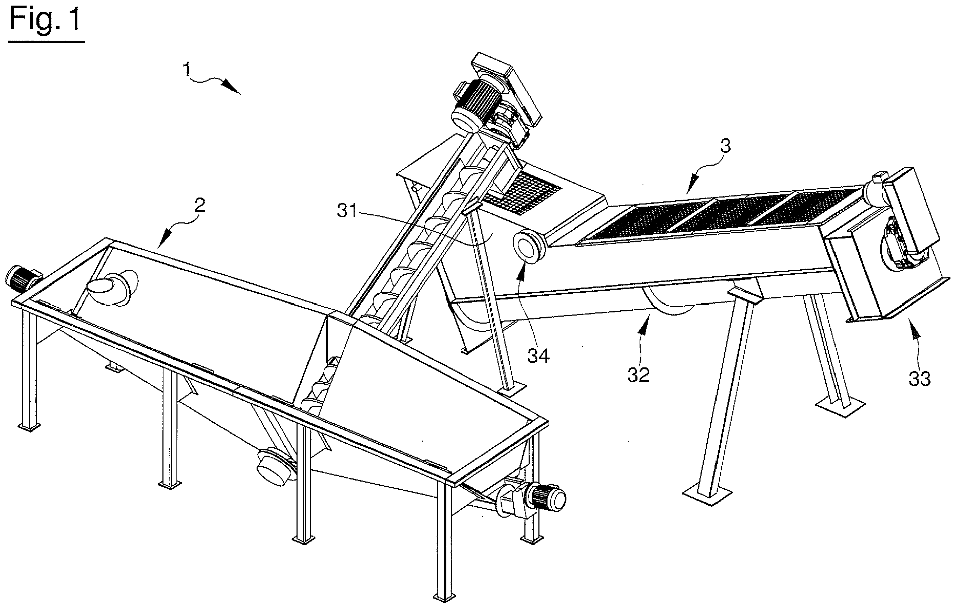

Figure 1 shows a plant 1 for reclaiming aggregates from concrete residues, particularly concrete residues comprising excess concrete quantities remained unused in a concrete mixer. The plant 1 comprises a feeding device 2 inside which the concrete residues to be treated can be discharged by the concrete mixers. The plant 1 further comprises a separation apparatus 3, also referred to as concrete separator, which is suitable for receiving, from the feeding device 2, a fluid containing the concrete residues, so that the aggregates can be separated from the fluid.

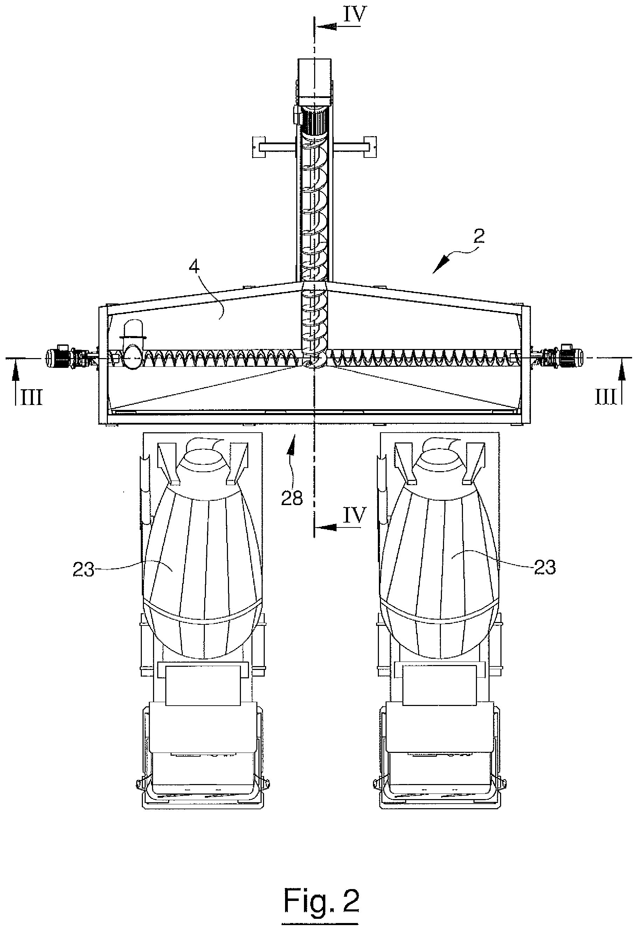

As shown in Figures 2 to 4, the feeding device 2 comprises a tank 4 suitable for containing the concrete residues, for example discharged from one or more concrete mixers.

The tank 4 can be made of metallic material, particularly sheet metal. Inside the tank 4, a main screw conveyor 5 is partially housed, the main screw conveyor 5 being suitable for collecting fluid from a collecting zone 6 located on the bottom of the tank 4, and for transferring the fluid towards the separation apparatus 3, thereby causing the fluid to exit through a discharge zone 10.

The discharge zone 10 is placed at a higher level than the maximum level reachable by the fluid inside the tank 4.

As it will be better described here below, the maximum level that the fluid can reach inside the tank 4 is defined by a discharge mouth 25.

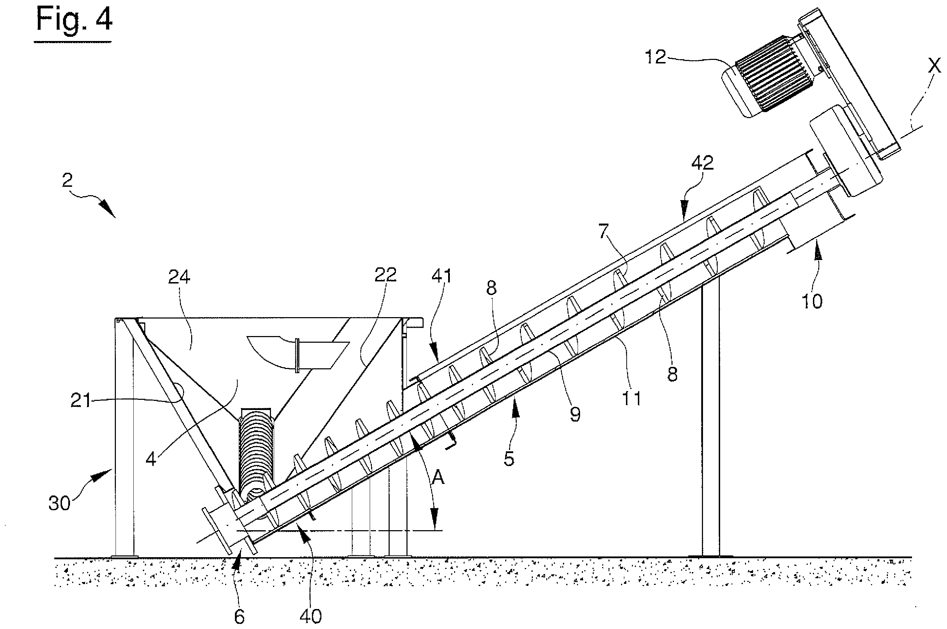

The main screw conveyor 5 comprises a spiral blade 7 having a longitudinal axis X, illustrated in Figure 4. The spiral blade 7 comprises a helix 8 wounded around a shaft 9 which is coaxial with the longitudinal axis X.

A motor 12, for example located near the discharge zone 10, allows the spiral blade 7 to rotate about the longitudinal axis X.

The longitudinal axis X may be inclined at an angle A with respect to the horizontal direction, in such a way that the discharge zone 10 is located higher than the discharge zone 6. For example, the angle A may be comprised between 10° and 50°, in particular between 20° and 40°.

The spiral blade 7 may have a variable pitch, i.e. the distance between the ridges of the helix 8 may vary, and in particular it may increase when moving from the collecting zone 6 towards the discharge zone 10.

The main screw conveyor 5 is configured to convey towards the separation apparatus 3 both the liquid part and the solid part of the fluid contained in the tank 4. To this end, the spiral blade 7 is housed inside a casing 11 in such a manner that the head surfaces of the spiral blade 7, i.e. the ridges thereof, are in direct contact with the casing 11. Thus, the amount of fluid which is able to flow between the helix 8 and the casing 11 in order to blow back into the tank 4, can be reduced to insignificant levels.

The casing 11 may have a cross-section exhibiting a bottom portion which is shaped like a circumferential arc, thus wrapping the lower part of the spiral blade 7, in particular from the collecting zone 6 to the discharge zone 10.

The casing 11 may be provided with an internal coating, particularly made of polymeric material or elastomeric material, so that the friction between the casing 11 and the spiral blade 7 is reduced, as well as the risk that the casing 11 is damaged by any solid particles which remained trapped between the ridges of the spiral blade 7 and the casing 11.

Inside the casing 11, an initial portion 40, an end portion 42 and a central portion 41 can be defined. The initial portion 40 is arranged near the collecting zone 6, the end portion 42 is arranged towards the discharge zone 10, and the central portion 41 is interposed between the initial portion 40 and the end portion 42. The initial portion 40 is located inside the tank 4 and exhibits a cross-section which is open at the top thereof, for example shaped as a "U", so as to wrap the lower part of the spiral blade 7. The central portion 41 is arranged outside the tank 4 and extends up to a height corresponding to the height of the discharge mouth 25. This central portion 41 has a cross-section which is closed at the top thereof, in order to prevent the liquid from flowing back from zones located at a higher level towards zones at a lower level. Finally, the end portion 42 extends between the central portion 41 and the discharge zone 10 and can be provided, at the top thereof, with a protection element, for example shaped as a grid or a net.

The feeding device 2 further comprises an auxiliary screw conveyor 13, which can be arranged along a bottom surface 14 of the tank 4 for conveying the fluid contained in the tank 4 towards the collecting zone 6. In the embodiment illustrated in Figures 1 to 4, a further auxiliary screw conveyor 15 is also provided, the further auxiliary screw conveyor 15 being completely similar to the auxiliary screw conveyor 13 and being arranged along a further bottom surface 16 of the tank 4 for conveying the fluid towards the collecting zone 6.

The bottom surface 14 and the further bottom surface 16 converge towards the collecting zone 6.

The auxiliary screw conveyor 13 and the further auxiliary screw conveyor 15 can be arranged symmetrically with respect to a vertical plane passing through the longitudinal axis X of the main screw conveyor 5.

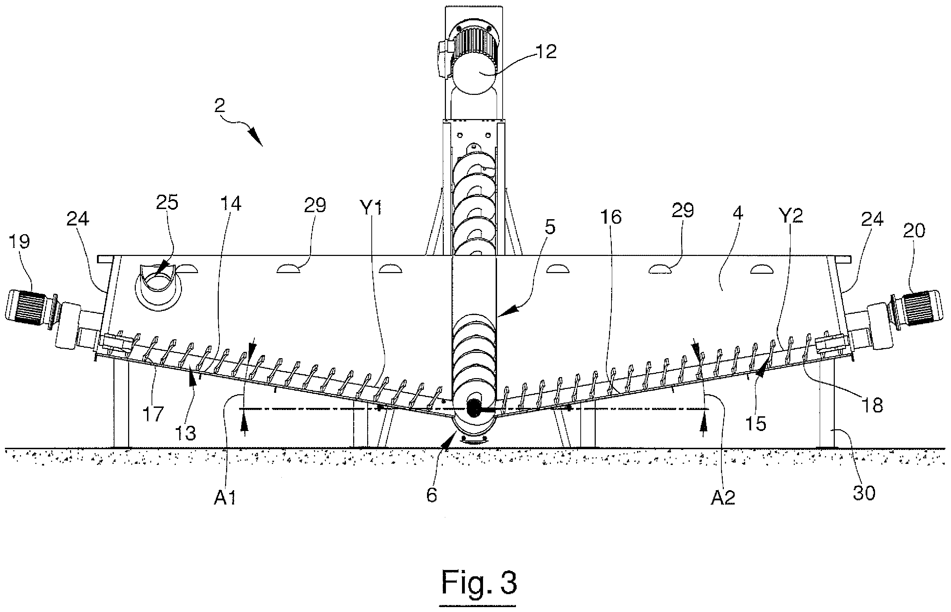

The auxiliary screw conveyor 13 comprises a screw having a spiral blade 17 exhibiting a main axis Y1. Similarly, the further auxiliary screw conveyor 15 comprises a screw having a spiral blade 18 which has a main axis Y2. As shown in Figure 3, the main axes Y1, Y2 can be inclined at respective angles A1, A2 with respect to the horizontal direction, so that the fluid can be conveyed towards the collecting zone 6 along a path inclined downwards.

The angles A1 and A2 can be comprised between 1° and 45°, in particular between 5° and 20°.

In the example shown, the angles A1 and A2 are equal to each other, however this condition is not strictly necessary.

The screws of the auxiliary screw conveyor 13 and of the further auxiliary screw conveyor 15, if present, may be shaftless. This means that the respective spiral blades 17, 18 are not wound around a respective shaft, but they are wound around a hollow central zone, which extends along the respective main axes Y1, Y2.

The feeding apparatus 2 further comprises a motor device 19 for rotatingly driving the spiral blade 17 of the auxiliary screw conveyor 13 about the main axis Y1. Similarly, a further motor device 20 is arranged for rotantigly driving the spiral blade 18 of the further auxiliary screw conveyor 15 about the respective main axis Y2.

The motor device 19 and the further motor device 20 can be positioned at an upper end of the corresponding spiral blades 17, 18.

The spiral blades 17, 18 allow to convey the fluid contained in the tank 4 towards the collecting zone 6, while exerting a mixing action, thereby preventing the solid components of the fluid from separating from the liquid components and/or aggregating and subsequently solidifying. In particular, the spiral blades 17, 18, prevent the solid components of the fluid contained within the tank 4 from adhering to the bottom surface 14 and to the further bottom surface 16. In order to achieve the same result in the absence of the auxiliary screw conveyor 13 and of the further auxiliary screw conveyor 15, it would be necessary to provide bottom surfaces 14, 16 having a significantly steep slope, which would considerably increase the height of the tank 4. Thus, among other things, the auxiliary screw conveyor 13 and the further auxiliary screw conveyor 15 allow to reduce the overall height of the tank 4. Also the quantity of liquid, particularly water, which should be introduced into the tank 4 for diluting the fluid contained therein, is reduced.

An excessive slope of the bottom surfaces 14, 16 could further cause the solid substances contained in the tank 4 to converge towards the collecting zone 6 too rapidly and in an uncontrolled manner. This could imply the risk that the main screw conveyor 5 does not collect uniform material from the collecting zone 6. In fact, in the initial operating steps, the main screw conveyor 5 could collect excessive quantities of solids and excessively low quantities of liquid, while the opposite would occur in the subsequent steps.

These drawbacks are overcome by the auxiliary screw conveyor 13 and the further auxiliary screw conveyor 15, if present, which exhibit a reduced downward inclination while proceeding towards the collecting zone 6, or which could even have respective horizontal axes.

The main axes Y1, Y2 of the auxiliary screw conveyors 13, 15 may lie on a common vertical plane, which is arranged transversely, in particular substantially perpendicularly, to a further vertical plane in which the longitudinal axis X of the main screw conveyor 5 lies.

In this way, the main screw conveyor 5 and the auxiliary screw conveyors 13, 15 define, in plan view, a "T"-shaped arrangement. This arrangement allows to maximize the width of the tank 4, into which the concrete residues can be discharged simultaneously by two concrete mixers 23 placed side by side, as shown in Figure 2.

Further arrangements of the main screw conveyor 5 and auxiliary screw conveyors 13, 15 are however also possible. In an alternative embodiment which is not shown, for example, a single auxiliary screw conveyor 13 is provided, which can be positioned transversely with respect to the main screw conveyor 5. In particular, the auxiliary screw conveyor 13 may be arranged substantially perpendicularly to the main screw conveyor 5, so as to define with the latter an "L"-shaped arrangement. Alternatively, the main screw conveyor 5 and the auxiliary screw conveyor 13 may have respective axes lying on a common vertical plane.

As illustrated in Figure 4, the tank 4 has a first side wall 21 and a second side wall 22, which are inclined downwards so that the bottom surface 14 and the further bottom surface 16 are interposed between the first side wall 21 and the second side wall 22. In order that the fluid contained within the tank 4, and in particular the solid components dispersed therein, may slide easily towards the bottom of the tank 4, the first side wall 21 and the second side wall 22 exhibit a quite high slope, for example greater than 45°.

The tank 4 further has two end walls 24, which are interposed between the first side wall 21 and the second side wall 22, so as to close the tank 4 transversely with respect to the main axes Y1, Y2.

As shown in Figures 3 and 4, in an upper region of the tank 4, there may be provided a discharge mouth 25 through which the fluid contained in the tank 4 can be discharged outwardly, in case the level of the fluid contained in the tank 4 exceeds a pre-determined limit value. The discharge mouth 25 thus acts as an overflow drain.

A discharge side 28 may be defined within the tank 4. The concrete mixers 23 may move close to the discharge side 28 in order to discharge the concrete residues contained in the concrete mixers 23. In the example shown, the discharge side 28 is arranged at the opposite side of the tank 4 with respect to the main screw conveyor 5. The discharge side 28 may be substantially parallel to the plane containing the main axes Y1, Y2.

As already explained above, in the example shown, the dimension of the discharge side 28 is enough for ensuring that two concrete mixers 23 can move simultaneously towards the tank 4 and be arranged side by side in order to discharge the concrete residues simultaneously.

The feeding device 2 may be provided with a plurality of nozzles 29, some of which are illustrated in Figure 3, for introducing a liquid, particularly water, into the tank 4. This liquid has the function to dilute the concrete residues discharged from the concrete mixers 23 and to maintain the tank 4 as clean as possible, i.e. to prevent solid parts of concrete from adhering to the walls of the tank 4.

The feeding device 2 further comprises a support frame 30 for supporting the tank 4 and the main screw conveyor 5.

The support frame 30 allows the feeding device 2 to be positioned on the ground, possibly by resting the feeding device 2 on a simple platform built for the purpose. The building works, if requested, that have to be carried out for installing the feeding device 2 are therefore extremely simple and easy to be performed. In addition, the feeding device 2 can be easily removed and re-positioned at a different location, if there is no more need to use it in the same place in which it was initially installed.

The tank 4 may have a height corresponding to the discharge height of the concrete mixers 23. In other words, access ramps are not necessary for allowing the concrete mixers 23 to discharge the concrete residues into the tank 4. The concrete mixers 23, after being positioned near the discharge side 28, may discharge the concrete residues directly into the tank 4.

As shown in Figure 1, the feeding device 2 is programmed for working in combination with a separation apparatus 3, so as to convey towards the separation apparatus 3 concrete residues containing aggregates that will be reclaimed by the separation apparatus 3.

In the example shown in Figure 1, the separation apparatus 3 is of the screw conveyor type. In particular, the separation apparatus 3 comprises a hopper 31, suitable for being positioned below the discharge zone 10 of the feeding device 2 in order to receive the fluid carried by the main screw conveyor 5. The separation apparatus 3 further comprises a separation conveyor 32, which may be provided with a screw, of which only the casing is visible in Figure 1, the separation conveyor 32 being suitable for removing the fluid from the hopper 31 and conveying it towards a discharge mouth 33. In particular, the solid part of the fluid processed by the separation conveyor, i.e. the aggregates, is conveyed upwards until it exits from the discharge mouth 33. After washing the aggregates, the liquid part overflows from the separation conveyor 32 through a further discharge mouth 34.

Instead of being coupled to a separation apparatus of the screw conveyor type, as in the embodiment shown in Figure 1, the feeding device 2 may be coupled to separation apparatuses of different kinds, particularly drum separation apparatuses or vibrating screen separation apparatuses.

During operation, one or more concrete mixers 23 discharge the concrete residues inside the tank 4, in which the concrete residues may be diluted with water or other liquid delivered by the nozzles 29. The tank 4 is thus filled with a fluid that is kept stirred by the auxiliary screw conveyors 13, 15, which also convey the fluid towards the collecting zone 6. Here, both the solid part and the liquid part of the fluid are collected by the spiral blade 7 of the main screw conveyor 5, which carries them to the discharge zone 10, from which they will exit in order to be processed by the separation apparatus 3.

The main screw conveyor 5 acts as a metering device, owing to which amounts of fluid collected from the tank 4 and controlled over time can exit from the discharge zone 10. In particular, the main screw conveyor 5 is configured in such a manner that the flow rate of fluid which exits from the discharge zone 10 is equal to the flow rate of fluid that can be processed by the separation apparatus 3. This allows the separation apparatus 3 to be fed continuously, even though concrete residues are discharged into the tank 4 discontinuously by the concrete mixers 23.

The fluid, which is conveyed by the main screw conveyor 5 towards the separation apparatus 3, has substantially the same composition as the fluid in the tank 4, since the main screw conveyor 5 allows to convey both the solid part and the liquid part of the fluid, preventing any significant fractions of the liquid part from flowing back.

The tank 4 also acts as a storage area, in which the concrete residues coming from the concrete mixers 23 may be stored. The concrete mixers 23 may discharge the concrete residues into the tank 4 at the maximum permissible discharge speed, without the operators having to worry about how much material is being actually handled in a unit of time by the separation apparatus 3. This allows the discharge operations of the concrete mixers 23 to be speeded up.

The feeding device 2 further ensures that the separation apparatus 3 operates in an optimal manner, since it allows the separation apparatus 3 to be fed under constant and repeatable conditions, both as regards the flow rate of the fluid which is conveyed towards the separation apparatus 3, and as regards the composition of the fluid that remains substantially homogeneous over time. The fluid comprises a solid part, defined by the concrete residues, and a liquid part.

In the description of the figures above, reference was made to concrete residues deriving from concrete quantities which were brought back by the concrete mixers since excessive quantities of concrete were prepared. However, the feeding device 1 can also process concrete residues which are dispersed in a washing fluid used for washing the drum of a concrete mixer.

## Claims

1. A feeding device for feeding a separation apparatus (3), the separation apparatus (3) being suitable for separating aggregates from concrete residues in order to reclaim said aggregates, the feeding device (2) comprising:
- a tank (4) for containing a fluid comprising a liquid in which the aggregates to be reclaimed are dispersed;
- a main screw conveyor (5) for collecting said fluid from a collecting zone (6) of the tank (4) and conveying the liquid and the aggregates contained in said fluid towards the separation apparatus (3); **characterized by**
- at least one auxiliary screw conveyor (13) positioned along a bottom surface (14) of the tank (4) for conveying the fluid towards said collecting zone (6).

2. A feeding device according to claim 1, wherein the auxiliary screw conveyor (13) is inclined downward towards the collecting zone (6).

3. A feeding device according to claim 1 or 2, and further comprising a further auxiliary screw conveyor (15) positioned along a further bottom surface (16) of the tank (4) so as to cooperate with the auxiliary screw conveyor (13) for conveying the fluid towards the collecting zone (6).

4. A feeding device according to claim 3, wherein the auxiliary screw conveyor (13) and the further auxiliary screw conveyor (15) are provided with respective screws (17, 18) having corresponding axes (Y1, Y2) which lie in a common vertical plane, a longitudinal axis (X) of the main screw conveyor (5) being arranged in a vertical plane which is arranged transversely, in particular substantially perpendicularly, to said common vertical plane.

5. A feeding device according to any preceding claim, wherein the auxiliary screw conveyor (13) and the further auxiliary screw conveyor (15), if present, comprise each a shaftless spiral.

6. A feeding device according to any preceding claim, wherein the auxiliary screw conveyor (13) and the further auxiliary screw conveyor (15), if present, have respective axes (Y1, Y2) each of which is inclined at an angle comprised between 1° and 45°, preferably comprised between 5° and 20°, with respect to a horizontal direction.

7. A feeding device according to any preceding claim, wherein the main screw conveyor (5) comprises a spiral blade (7) winding around a shaft (9) and a casing (11) housing said spiral blade (7), said casing (11) having a cross-section which is partially shaped like a circumferential arc so as to be in contact with a plurality of ridges of said spiral blade (7).

8. A feeding device according to claim 7, wherein the casing (11) has an initial portion (40) immersed in the tank (4) and having a cross-section which is open at the top, a central portion (41) located outside the tank (4) and having a cross-section which is closed at the top, and an end portion (42) interposed between the central portion (41) and a discharge zone (10), said end portion (42) having a cross-section provided with a protection element in an upper area thereof.

9. A feeding device according to any preceding claim, wherein the main screw conveyor (5) has a longitudinal axis (X) inclined at an angle (A) comprised between 10° and 50°, preferably comprised between 20° and 40°, with respect to a horizontal direction.

10. A plant for reclaiming aggregates from concrete residues, comprising a separation apparatus (3) for separating the aggregates from a fluid containing the concrete residues and a feeding device (2) according to any one of claims 1 to 9 for feeding the separation apparatus (3) with said fluid.

11. A plant according to claim 10, wherein the separation apparatus (3) is selected from a group comprising: a screw conveyor separation apparatus, a drum separation apparatus, a vibrating screen separation apparatus.

12. A plant according to claim 10 or 11, wherein the main screw conveyor (5) is so configured as to have a flow rate substantially equal to the flow rate that can be processed by the separation apparatus (3).

## Patentansprüche

1. Zuführungsvorrichtung zum Beschicken einer Trennvorrichtung (3), wobei die Trennvorrichtung (3) geeignet ist, um Aggregate von Betonresten zu trennen, um die Aggregate zurückzugewinnen, wobei die Zuführungsvorrichtung (2) umfasst:
- einen Tank (4) zum Aufnehmen eines Fluids, das eine Flüssigkeit umfasst, in der die zurückzugewinnenden Aggregate dispergiert sind;
- einen Hauptschneckenförderer (5) zum Sammeln des Fluids aus einer Sammelzone (6) des Tanks (4) und Befördern der Flüssigkeit und der in dem Fluid enthaltenen Aggregate zur Trennvorrichtung (3); **gekennzeichnet durch**
- wenigstens einen Hilfsschneckenförderer (13), der entlang einer Bodenfläche (14) des Tanks (4) angeordnet ist, um das Fluid zur Sammelzone (6) zu befördern.

2. Zuführungsvorrichtung nach Anspruch 1, wobei der Hilfsschneckenförderer (13) zur Sammelzone (6) hin abwärts geneigt ist.

3. Zuführungsvorrichtung nach Anspruch 1 oder 2, und ferner umfassend einen weiteren Hilfsschneckenförderer (15), der entlang einer weiteren Bodenfläche (16) des Tanks (4) angeordnet ist, um mit dem Hilfsschneckenförderer (13) zum Befördern des Fluids zur Sammelzone (6) zusammenzuwirken.

4. Zuführungsvorrichtung nach Anspruch 3, wobei der Hilfsschneckenförderer (13) und der weitere Hilfsschneckenförderer (15) mit jeweiligen Schrauben (17, 18) versehen sind, die jeweilige Achsen (Y1, Y2) aufweisen, die in einer gemeinsamen vertikalen Ebene liegen, wobei eine Längsachse (X) des Hauptschneckenförderers (5) in einer vertikalen Ebene angeordnet ist, die quer, insbesondere im Wesentlichen senkrecht, zu der gemeinsamen vertikalen Ebene angeordnet ist.

5. Zuführungsvorrichtung nach einem der vorstehenden Ansprüche, wobei der Hilfsschneckenförderer (13) und der weitere Hilfsschneckenförderer (15), falls vorhanden, jeweils eine schaftlose Spirale umfassen.

6. Zuführungsvorrichtung nach einem der vorstehenden Ansprüche, wobei der Hilfsschneckenförderer (13) und der weitere Hilfsschneckenförderer (15), falls vorhanden, jeweilige Achsen (Y1, Y2) aufweisen, die jeweils mit einem Winkel zwischen 1° und 45° einschließlich, vorzugsweise zwischen 5° und 20° einschließlich, in Bezug auf eine horizontale Richtung geneigt sind.

7. Zuführungsvorrichtung nach einem der vorstehenden Ansprüche, wobei der Hauptschneckenförderer (5) eine Spiralschaufel (7), die sich um einen Schaft (9) windet, und ein Gehäuse (11) umfasst, das die Spiralschaufel (7) aufnimmt, wobei das Gehäuse (11) einen Querschnitt aufweist, der teilweise wie ein Umfangsbogen geformt ist, um mit einer Vielzahl von Graten der Spiralschaufel (7) in Kontakt zu stehen.

8. Zuführungsvorrichtung nach Anspruch 7, wobei das Gehäuse (11) einen Anfangsabschnitt (40), der in den Tank (4) eingetaucht ist und einen Querschnitt aufweist, der an der Oberseite offen ist, einen Mittelabschnitt (41), der außerhalb des Tanks (4) angeordnet ist und einen Querschnitt aufweist, der an der Oberseite geschlossen ist, und einen Endabschnitt (42) aufweist, der zwischen dem Mittelabschnitt (41) und einer Auslaufzone (10) angeordnet ist, wobei der Endabschnitt (12) einen Querschnitt aufweist, der in einem oberen Bereich davon mit einem Schutzelement versehen ist.

9. Zuführungsvorrichtung nach einem der vorstehenden Ansprüche, wobei der Hauptschneckenförderer (5) eine Längsachse (X) aufweist, die mit einem Winkel (A) zwischen 10° und 50° einschließlich, vorzugsweise zwischen 20° und 40° einschließlich, in Bezug auf die horizontale Richtung geneigt ist.

10. Anlage zum Rückgewinnen von Aggregaten aus Betonresten, umfassend eine Trennvorrichtung (3) zum Trennen der Aggregate aus einem Fluid, das die Betonreste enthält, und eine Zuführungsvorrichtung nach einem der Ansprüche 1 bis 9 zum Beschicken der Trennvorrichtung (3) mit dem Fluid.

11. Anlage nach Anspruch 10, wobei die Trennvorrichtung ausgewählt ist aus einer Gruppe umfassend: eine Schneckenförderertrennvorrichtung, eine Trommeltrennvorrichtung, eine Rüttelsiebtrennvorrichtung.

12. Anlage nach Anspruch 10 oder 11, wobei der Hauptschneckenförderer (5) so konfiguriert ist, dass er eine Durchflussrate aufweist, die im Wesentlichen gleich der Durchflussrate ist, die von der Trennvorrichtung (3) verarbeitet werden kann.

## Revendications

1. Un dispositif d'alimentation pour alimenter un appareil de séparation (3), l'appareil de séparation (3) étant destiné à séparer des granulats de résidus de béton de manière à récupérer lesdits granulats, le dispositif d'alimentation (2) comprenant :
- une cuve (4) pour contenir un fluide comprenant un liquide dans lequel les granulats à récupérer sont dispersés ;
- un transporteur à vis principal (5) pour prélever ledit fluide depuis une zone de prélèvement (6) de la cuve (4) et acheminer le liquide et les granulats contenus dans ledit fluide vers l'appareil de séparation (3) ; **caractérisé par**
- au moins un transporteur à vis auxiliaire (13) positionné le long d'une surface de fond (14) de la cuve (4) pour acheminer le fluide vers ladite zone de prélèvement (6).

2. Le dispositif d'alimentation selon la revendication 1, dans lequel le transporteur à vis auxiliaire (13) est incliné vers le bas vers la zone de prélèvement (6).

3. Le dispositif d'alimentation selon la revendication 1 ou 2, et comprenant en outre un autre transporteur à vis auxiliaire (15) positionné le long d'une autre surface de fond (16) de la cuve (4) de manière à coopérer avec le transporteur à vis auxiliaire (13) pour acheminer le fluide vers la zone de prélèvement (6).

4. Le dispositif d'alimentation selon la revendication 3, dans lequel le transporteur à vis auxiliaire (13) et l'autre transporteur à vis auxiliaire (15) sont dotés de vis (17, 18) respectives ayant des axes (Y1, Y2) correspondants qui sont situés dans un plan vertical commun, un axe longitudinal (X) du transporteur à vis principal (5) étant situé dans un plan vertical qui est disposé transversalement, en particulier essentiellement perpendiculairement, audit plan vertical commun.

5. Le dispositif d'alimentation selon l'une quelconque des revendications précédentes, dans lequel le transporteur à vis auxiliaire (13) et l'autre transporteur à vis auxiliaire (15), si présent, comprennent chacun une spirale sans arbre.

6. Le dispositif d'alimentation selon l'une quelconque des revendications précédentes, dans lequel le transporteur à vis auxiliaire (13) et l'autre transporteur à vis auxiliaire (15), si présent, ont des axes (Y1, Y2) respectifs qui sont chacun inclinés d'un angle compris entre 1° et 45°, de préférence compris entre 5° et 20°, par rapport à une direction horizontale.

7. Le dispositif d'alimentation selon l'une quelconque des revendications précédentes, dans lequel le transporteur à vis principal (5) comprend une pale hélicoïdale (7) s'enroulant autour d'un arbre (9) et un carter (11) logeant ladite pale hélicoïdale (7), ledit carter (11) ayant une section transversale qui est partiellement conformée comme un arc de cercle de manière à être en contact avec une pluralité de crêtes de ladite pale hélicoïdale (7).

8. Le dispositif d'alimentation selon la revendication 7, dans lequel le carter (11) a une portion initiale (40) immergée dans la cuve (4) et ayant une section transversale qui est ouverte sur le dessus, une portion centrale (41) située à l'extérieur de la cuve (4) et ayant une section transversale qui est fermée sur le dessus, et une portion finale (42) interposée entre la portion centrale (41) et une zone de déchargement (10), ladite portion finale (42) ayant une section transversale dotée d'un élément de protection dans une zone supérieure de celle-ci.

9. Le dispositif d'alimentation selon l'une quelconque des revendications précédentes, dans lequel le transporteur à vis principal (5) a un axe longitudinal (X) incliné d'un angle (A) compris entre 10° et 50°, de préférence compris entre 20° et 40°, par rapport à une direction horizontale.

10. Une installation de récupération de granulats à partir de résidus de béton, comprenant un appareil de séparation (3) pour séparer les granulats d'un fluide contenant les résidus de béton et un dispositif d'alimentation (2) selon l'une quelconque des revendications de 1 à 9 pour alimenter l'appareil de séparation (3) avec ledit fluide.

11. L'installation selon la revendication 10, dans laquelle l'appareil de séparation (3) est sélectionné dans un groupe comprenant : un appareil de séparation à transporteur à vis, un appareil de séparation à tambour, un appareil de séparation à crible vibrant.

12. L'installation selon la revendication 10 ou 11, dans laquelle le transporteur à vis principal (5) est configuré de façon telle qu'il a un débit essentiellement égal au débit qui peut être traité par l'appareil de séparation (3).
